(19) Europäisches Patentamt
European Patent Office
Office européen des brevets

(11) **EP 2 823 524 B1**

(12) **FASCICULE DE BREVET EUROPEEN**

(45) Date de publication et mention de la délivrance du brevet:
**02.05.2018 Bulletin 2018/18**

(21) Numéro de dépôt: **12794418.9**

(22) Date de dépôt: **30.10.2012**

(51) Int Cl.:
*H01M 10/0525* (2010.01)   *H01M 4/1391* (2010.01)
*C25D 13/02* (2006.01)   *H01M 4/04* (2006.01)
*C25D 9/04* (2006.01)   *H01M 4/66* (2006.01)
*C25D 5/10* (2006.01)   *C25D 13/22* (2006.01)
*C25D 15/00* (2006.01)   *H01M 10/0585* (2010.01)
*H01M 4/139* (2010.01)   *H01M 10/0562* (2010.01)
*H01M 4/485* (2010.01)   *C25D 5/50* (2006.01)

(86) Numéro de dépôt international:
**PCT/FR2012/052517**

(87) Numéro de publication internationale:
**WO 2013/064781 (10.05.2013 Gazette 2013/19)**

(54) **BATTERIES EN COUCHES MINCES ENTIEREMENT SOLIDES ET PROCEDE DE FABRICATION DE BATTERIES EN COUCHES MINCES ENTIEREMENT SOLIDES**

VOLLFESTKÖRPER-DÜNNSCHICHTBATTERIEN UND VERFAHREN ZUR HERSTELLUNG VON VOLLFESTKÖRPER-DÜNNSCHICHTBATTERIEN

FULLY SOLID THIN-FILM BATTERIES AND METHOD FOR PRODUCING FULLY SOLID THIN-FILM BATTERIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2011 FR 1159886**

(43) Date de publication de la demande:
**14.01.2015 Bulletin 2015/03**

(73) Titulaire: **I-TEN**
**69410 Champagne-au-Mont-d'Or (FR)**

(72) Inventeurs:
• **BOUYER, Frédéric**
  **F-21160 Perrigny Les Dijon (FR)**
• **VUILLEMIN, Bruno**
  **F-39230 Darbonnay (FR)**
• **GABEN, Fabien**
  **F-69130 Ecully (FR)**

(74) Mandataire: **Schmidt, Martin Peter**
**IXAS Conseil**
**15, rue Emile Zola**
**69002 Lyon (FR)**

(56) Documents cités:
WO-A1-2008/089110   JP-A- 2002 042 790
JP-A- 2002 042 792   US-A- 5 518 839
US-A1- 2008 226 986   US-B1- 6 607 645
US-B2- 7 662 265

• FERRARI ET AL: "EPD of thick films for their application in lithium batteries", JOURNAL OF THE EUROPEAN CERAMIC SOCIETY, ELSEVIER SCIENCE PUBLISHERS, BARKING, ESSEX, GB, vol. 27, no. 13-15, 1 janvier 2007 (2007-01-01), pages 3823-3827, XP022143643, ISSN: 0955-2219, DOI: 10.1016/J.JEURCERAMSOC.2007.02.051

**Description**

**Domaine technique de l'invention**

La présente invention concerne la réalisation de batteries entièrement solides, i.e. sans électrolyte liquide, ayant de fortes densités d'énergie massiques et volumiques. Elle concerne plus particulièrement les batteries à base d'ions de lithium (« Li-ion »).

**Etat de la technique**

Les modes de fabrication des batteries Li-ion sont présentés dans de nombreux articles et brevets, et l'ouvrage « Advances in Lithium-Ion Batteries » (ed. W. van Schalkwijk et B. Scrosati), paru en 2002 (Kluever Academic / Plenum Publishers) en donne un bon état des lieux. Les batteries de type Li-ion conventionnelles sont constituées de poudres de matériaux actifs déposées sur des substrats métalliques qui servent également de collecteurs de courant anodique et cathodique. Ces poudres de matériaux actifs comportent également des liants et des poudres de conducteurs électriques (par exemple des poudres de carbone ou de graphite) afin de réaliser une encre qui sera déposée et séchée sur ces substrats métalliques. Après cette étape d'enduction, les couches déposées sont calandrées afin de créer des contacts électriques entre les particules et de manière à augmenter la densité volumique des électrodes. Les porosités résiduelles des électrodes sont ensuite remplies par les électrolytes constitués par un solvant aprotique dans lesquels des sels de lithium ont été dissouts.

Dans ces batteries Li-ion selon l'état de la technique, les liants et conducteurs servent à assurer la qualité des contacts électriques entre les particules et à garantir le contact physique et l'adhérence entre les particules et entre les particules et le collecteur de courant. Tous ces additifs conduisent à des augmentations de masse et de volume pouvant atteindre 50% pour une cellule batterie. Par ailleurs, pour assurer le transport des ions lithium dans l'épaisseur de l'électrode, il est nécessaire d'imprégner ces électrodes (via ses porosités) d'un électrolyte contenant des sels de lithium ; cela augmente la densité volumique de la batterie.

Dans ces batteries Li-ion selon l'état de la technique, l'anode fonctionne en général à des potentiels très faibles (proche de 0 à 1 V Li/Li$^+$) alors que la cathode fonctionne à des potentiels beaucoup plus élevés (situés généralement proche de 4 V/Li). Aussi, les collecteurs de courant métalliques situés à l'anode sont, lors de leur contact avec les électrolytes liquides, polarisés à des potentiels très réducteurs et inversement, les cathodes sont polarisées à des potentiels très oxydants. Cependant, pour le bon fonctionnement de la cellule batterie, les collecteurs de courant ne doivent pas se corroder. Toute dissolution de cations métalliques dans la cellule batterie peut donner lieu à l'apparition de courts-circuits. Aussi, pour éviter ces problèmes de corrosion, les anodes sont déposées sur des feuillards en cuivre et les cathodes sur des feuillards en aluminium, ce dernier étant préféré pour une raison de coût, de densité volumique et de stabilité chimique aux potentiels élevés.

Par ailleurs, pour collecter le courant avec une résistance ohmique aussi faible que possible, les électrodes doivent adhérer parfaitement sur les surfaces des collecteurs de courant. De la qualité de ce contact électrique dépendra en partie la résistance ohmique de la cellule batterie. En fonctionnement anodique, l'aluminium ne se dissout pas mais en revanche, un film d'oxyde a tendance à se former à sa surface contribuant à créer une résistance de contact supplémentaire. Aussi, la bonne préparation de surface des feuillards d'aluminium utilisés pour la fabrication des batteries est essentielle pour garantir ces propriétés d'adhérence et de qualité de contact électrique.

S'agissant de la réalisation des batteries en couches minces, ces dernières utilisent en général des électrodes réalisées à l'aide de techniques du vide et les collecteurs de courant sont déposés, également à l'aide de techniques du vide, directement sur un substrat. L'épaisseur de ces collecteurs de courant est généralement extrêmement faible et de l'ordre de quelques dixièmes de microns. Les faibles épaisseurs et surfaces des électrodes des microbatteries en couches minces font que les courants délivrés restent très faibles et il n'est pas nécessaire d'accroitre l'épaisseur des collecteurs de courant, ce qui poserait des problèmes de couts, car plus l'épaisseur du collecteur de courant augmente plus le temps de dépôt augmente.

Et enfin, contrairement aux électrodes de batteries réalisées à l'aide de techniques d'impression, les électrodes de batteries en couches minces ont des épaisseurs maximales proches de 5 microns, et les épaisseurs des feuillards d'aluminium utilisés conventionnellement pour la réalisation des batteries Li-ion sont beaucoup trop importantes (-15 microns) eu égard à la quantité de courant produite par ces électrodes en couches minces. Il s'ensuit que la masse, le coût de matière et le coût de la préparation de ces électrodes devient un enjeu. Le document JP2002042790 décrit un procédé de fabrication de batterie où les électrodes sont déposées par électrophorèse.

**Objets de l'invention**

Un premier but de l'invention est la réalisation d'une batterie de type Li-ion en couches solides qui présente une densité d'énergie massique de la cellule batterie améliorée.

Un autre but de l'invention est la réalisation d'une batterie de type Li-ion en couches solides qui présente une densité d'énergie volumique de la cellule batterie améliorée.

Un autre but est l'amélioration du contact électrique entre les électrodes et les collecteurs de courant dans une batterie de type Li-ion en couches solides, dans le but de réduire les pertes ohmiques et d'améliorer la durabilité.

Un autre but est un procédé de fabrication d'une batterie de type Li-ion en couches solides qui permette une réduction des coûts de fabrication.

Selon l'invention, dans le but d'accroître à la fois les densités d'énergie massiques et volumiques des batteries Li-ion, on utilise des collecteurs de courant anodique et cathodique en aluminium, et on dépose les électrodes en couches minces directement sur des substrats en aluminium constituées par des feuilles ou bandes d'une épaisseur de quelques micromètres.

Cela engendre une difficulté nouvelle. En effet, il est essentiel que l'électrode adhère parfaitement sur le substrat en aluminium et que la résistance de contact soit la plus faible possible afin de limiter les chutes ohmiques lors du fonctionnement de la batterie. Pour cela, la surface du substrat en aluminium doit être parfaitement conductrice et adhérente, et donc peu oxydée.

Par ailleurs, pour garantir le bon fonctionnement de la cellule batterie et éviter les risques de micro courts-circuits, matérialisés par de fortes cinétiques d'autodécharges, la rugosité de surface du substrat doit être la plus faible possible. Les rugosités de surfaces associées à la très faible épaisseur des électrodes en couches minces peuvent donner lieu à l'apparition de courts-circuits.

Lorsque les collecteurs de courant sont déposés en couches minces à l'aide de techniques du vides, comme cela est le cas dans les batteries Li-ion selon l'état de la technique, leur état de surface est quasiment parfait ; en revanche, lorsque l'on utilise des feuillards métalliques comme substrat et électrode, des rugosités demeurent à la surface de la feuille de métal.

Pour résoudre ces problèmes, les inventeurs ont réalisé une batterie en couches minces, entièrement solide, et consolidée de manière à ce qu'elle puisse fonctionner et présenter un bon transport des ions et des électrons, sans ajouter dans sa formulation de liants, ladite batterie comprenant des collecteurs de courant anodiques et cathodique en aluminium.

D'une manière générale, ces buts sont atteints avec une batterie de type Li-ion en couches solides denses dont les collecteurs de courant sont exclusivement en aluminium ; ces collecteurs de courant en aluminium peuvent être revêtus de nickel ou d'un autre métal ou alliage métallique, afin d'éviter la formation d'une couche d'oxyde et améliorer la qualité des contacts électriques et l'adhérence des dépôts. Les couches solides denses de cette batterie sont avantageusement préparées par électrophorèse. Ainsi, un premier objet de l'invention est une batterie en couches entièrement solides, comprenant un collecteur de courant d'anode, une couche d'électrode anodique, une couche d'électrolyte, une couche d'électrode cathodique, un collecteur de courant de cathode, caractérisée en ce que le collecteur de courant d'anode et le collecteur de courant de cathode sont en feuille d'aluminium. Ladite feuille d'aluminium peut être amincie par électro-polissage pour en diminuer l'épaisseur et la rugosité de surface, avant le dépôt de l'électrode. Son épaisseur est avantageusement inférieure à 7 $\mu$m, de préférence inférieure à 5 $\mu$m, et encore plus préférentiellement inférieure à 2 $\mu$m.

Dans cette batterie en couches solides, l'épaisseur des électrodes est avantageusement comprise entre 0,5 $\mu$m et 20 $\mu$m. Les couches d'électrodes et la couche d'électrolyte sont déposées par électrophorèse. L'utilisation d'un procédé d'électrophorèse à partir d'une suspension de nanoparticules en mode anaphorèse permet le dépôt de couches minces denses d'électrodes sur le substrat représenté par le feuillard en aluminium, sans que ce dernier ne se dissolve.

Ladite feuille d'aluminium peut être recouverte d'un dépôt métallique sur la face en contact avec les électrodes, et possiblement aussi sur l'autre face, ledit dépôt métallique étant sélectionné dans le groupe constitué par le nickel, un alliage de nickel, l'argent, l'étain, l'or, le zinc, ce dépôt étant appliqué avant le dépôt des couches d'électrode. Le dépôt métallique, par exemple le nickelage, peut être réalisé de différentes manières, soit par dépôt électrochimique, soit par immersion dans une solution contenant des sels de nickel soit les deux successivement.

La couche d'électrode peut être déposée en particulier par électrophorèse à partir d'une suspension de nanoparticules comprenant au moins un matériau actif d'électrode pour batterie à insertion du lithium, et éventuellement au moins un matériau qui est un conducteur électrique et/ou un conducteur ionique. Ledit matériau actif d'électrode pour batterie à insertion du lithium peut être plus ou moins conducteur en fonction des compositions chimiques choisies de sorte que la quantité de poudre conductrice éventuellement ajoutée à la composition de l'électrode, et par voie de conséquence dans la suspension colloïdale, est adaptée pour garantir de bonnes propriétés de transport des ions et des électrons pour l'épaisseur d'électrode visée.

La taille moyenne $D_{50}$ des grains dans les couches d'électrodes et d'électrolyte est avantageusement comprise entre 1 nm et 100 nm, de préférence comprise entre 5 nm et 30 nm.

Dans le cadre de la présente invention, on peut aussi déposer un des collecteurs de courant d'électrode, ou encore les deux, par un procédé de technique sous vide, pourvu que l'électrode est déposée par une technique d'électrophorèse.

Selon un mode de réalisation avantageux le(s) matériau(x) formant la couche d'électrode anodique est (sont) sélectionné(s) dans le groupe formé par :

(i) les oxynitrures d'étain (de formule typique $SnO_xN_y$);

(ii) les oxynitrures mixtes de silicium et étain (de formule typique $Si_aSn_bOyN_z$ avec a>0, b>0, a+b≤2, 0<y≤4, 0<z≤3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cOyN_zX_n$ et $Si_aSn_bOyN_zX_n$ avec Xn au moins un des éléments parmi F, Cl, Br, I, S, Se, Te, P, As, Sb, Bi, Ge, Pb.

(iii) les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu) ;

(iv) les oxydes $SnO_2$, $Li_4Ti_5O_{12}$, $SnB_{0,6}P_{0,4}O_{2,9}$.

Selon un autre mode de réalisation avantageux pouvant être combiné avec le précédent, le(s) matériau(x) formant la couche d'électrode cathodique est (sont) sélectionné(s) dans le groupe formé par :

(i) les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ (où x est sélectionné parmi Al, Fe, Cr, Co, Rh, Nd, autres terres rares, et où 0 < x < 0,1), $LiFeO_2$, $LiMn_{1/3}Ni_{1/3}Co_{1/3}O_4$;

(ii) les phosphates $LiFePO_4$ $LiMnPO_4$, $LiCoPO_4$, $LiNiPO_4$, $Li_3V_2(PO_4)_3$ ;

(iii) toutes les formes lithiées des chalcogénides suivants : $V_2O_5$, $V_3O_8$, $TiS_2$, $TiO_yS_z$, $WO_yS_z$, $CuS$, $CuS_2$.

Selon encore un autre mode de réalisation avantageux, pouvant être combiné avec chacun des deux précédents, ou avec les deux à la fois, le(s) matériau(x) formant la couche d'électrolyte est (sont) sélectionné(s) dans le groupe formé par :

(i) les composés lithiés à base d'oxynitrure de lithium et de phosphore (appelés LiPON) sous forme $Li_xPO_yN_z$ avec x ~2,8 et 2y+3z ~7,8 et 0,16 ≤ z ≤ 0,4, et en particulier le $Li_{2,9}PO_{3,3}N_{0,46}$, mais également toutes les variantes sous forme $Li_wPO_xNyS_z$ avec 2x+3y+2z = 5=w et 3,2 ≤ x ≤ 3,8, 0,13 ≤ y 0,4, 0 ≤ z ≤ 0,2, 2,9 ≤ w ≤ 3,3 ou sous forme $Li_tP_xAl_yO_uN_vS_w$ avec 5x+3y=5, 2u+3v+2w=5+t, 2,9≤t≤3,3, 0,94≤x≤0,84, 0,094≤y≤0,26, 3,2≤u≤3,8, 0,13≤v≤0,46, 0≤w≤0,2.

(ii) les composé lithiés à base d'oxynitrure de lithium, de phosphore et de silicium (appelés LiSiPON), et en particulier le $Li_{1,9}Si_{0,28}P_{1,0}O_{1,1}N_{1,0}$;

(iii) les oxynitrures de lithium de types LiBON, LiBSO, LiSiPON, LiSON, thio-LiSiCON, LiPONB (ou B, P et S représentent respectivement le bore, le phosphore et le soufre);

(iv) les composés $La_{0,51}Li_{0,34}Ti_{2,94}$, $Li_{3,4}V_{0,4}Ge_{0,6}O_4$, $Li_2O-Nb_2O_5$, $LiAlGaSPO_4$;

(v) les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où 0 < x < 1), $Li_{1+x+y}Al_xTi_{2-x}Si_yP_{3-y}O_{12}$ (où 0≤x≤1 et 0≤y≤1), $Li_{n-x+z}M_x(Ge_{1-y}Tiy)_{2-x}Si_zP_{3-z}O_{12}$ (où 0 ≤ x ≤0,8 ; 0 ≤ y ≤ 1,0; 0 ≤ z ≤ 0,6), et en particulier les formulations 4,9LiI-34,1$Li_2O$-61$B_2O_3$, 0,30$Li_2S$-0,26$B_2S_3$-0,44LiI, 60$Li_2S$-40$SiS_2$, 0,02$Li_3PO_4$-0,98($Li_2S$-$SiS_2$), 2($L_{1,4}Ti_2Si_{0,4}4P_{2,6}O_{12}$)-$AlPO_4$, 0,7$Li_2S$-0,3$P_2S_5$.

Une telle batterie en couches entièrement solides selon l'invention peut comprendre une pluralité des batteries empilées.

Un autre objet de la présente invention est un procédé de fabrication de batteries en couches minces entièrement solides, et notamment de batteries telles que décrites ci-dessus, comprenant les étapes suivantes :

(a) Approvisionnement d'une première suspension colloïdale « *SP+* » contenant des particules « *P+* » dite de « matériaux de cathode » ;

(b) Approvisionnement d'une deuxième suspension colloïdale « *SP-* » contenant des particules « *P-* » dite de « matériaux d'anode » ;

(c) Approvisionnement d'une troisième suspension colloïdale « *SPn* » de particules « *Pn* » dite de « matériaux d'électrolyte solide » conductrice des ions lithium;

(d) Approvisionnement de substrats conducteurs sous la forme d'une bande ou d'une feuille d'aluminium;

(e) Immersion d'un premier substrat conducteur dans un bain de ladite suspension SP+ contenant des particules P+ de matériaux de cathode en présence d'une contre-électrode, suivi de l'application d'une tension électrique continue ou alternée entre ledit premier substrat conducteur et ladite contre-électrode de manière à obtenir un dépôt électrophorétique de particules P+ de matériaux de cathode sur ledit premier substrat conducteur ;

(f) Immersion d'un deuxième substrat conducteur dans un bain de ladite suspension SP-contenant des particules P- de matériaux d'anode en présence d'une contre-électrode, suivi de l'application d'une tension électrique continue ou alternée entre ledit deuxième substrat conducteur et ladite contre-électrode de manière à obtenir un dépôt électrophorétique de particules *P-* de matériaux d'anode sur ledit substrat conducteur ;

(g) Immersion du premier substrat revêtu à l'étape (e) et/ou du deuxième substrat revêtu à l'étape (f) dans un bain de ladite suspension *SPn* de particules *Pn* de matériaux d'électrolyte solide en présence d'une contre-électrode, suivi de l'application d'une tension électrique continue ou alternée entre ledit premier et/ou deuxième substrat revêtu et la contre-électrode de manière à obtenir un dépôt électrophorétique de particules de matériaux d'électrolyte solide inorganique sur ledit ou lesdits substrat(s) ;

(h) Empilement des substrats de cathode et d'anode pour obtenir une batterie.

Dans ce procédé, les dépôts électrophorétiques des particules SP+ et/ou SP- et/ou SPn peuvent être effectués par anaphorèse. La taille moyenne $D_{50}$ des particules de matériau d'anode, de cathode et/ou d'électrolyte solide est avantageusement inférieure à 1 $\mu$m, de préférence inférieure à 100 nm et encore plus préférentiellement inférieure ou égale à 30 nm.

**Figures**

Les figures 1 à 6 illustrent l'invention.

Les figures 1 et 2 montrent des courbes de voltampérométrie cyclique mesurées sur des électrodes dans des batteries selon l'invention.

La figure 3 montre la distribution des tailles de particules dans une suspension colloïdale de poudres nanométriques du $Li_{1,3}Al_{0,3}Ti_{1,7}(PO_4)_3$ utilisable pour déposer des couches d'électrolyte dans des batteries selon l'invention.

La figure 4 montre les étapes d'un procédé permettant de réaliser les batteries selon l'invention.

Les figures 5(a), 5(b), 5(c) et 5(d) avec la figure 6 montrent les produits obtenus à quatre étapes d'un mode de réalisation particulier du procédé selon l'invention.

**Description**

**1. Définitions**

Dans le cadre de la présente invention, on entend par « dépôt électrophorétique » ou « dépôt par électrophorèse » une couche déposée par un procédé de dépôt de particules électriquement chargées en surface, préalablement mises en suspension dans un milieu liquide, sur un substrat conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt compact de particules se forme sur le substrat, si le potentiel zêta présente une valeur appropriée comme il sera expliqué ci-dessous.
Un dépôt appelé « compact » est un dépôt qui ne comporte pas de cavités, ni de fissures. En revanche, il comporte des porosités dont le taux s'exprime en pourcentage et se calcule de la manière suivante :

Porosité [%] = [(densité du matériau massif – densité vraie)/densité vraie] x 100

sachant que la « densité vraie » est la densité mesurée sur la couche déposée et que la densité du matériau massif est la densité massive du matériau déposé, en faisant abstraction de la présence de particules dont l'empilement forme une porosité.

Dans le cadre du présent document, la « taille » d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble des particules est donnée en $D_{50}$.

Le « potentiel zêta » d'une suspension est défini comme la différence de potentiel existant entre le sein de la solution, et le plan de cisaillement de la particule. Il est représentatif de la stabilité d'une suspension. Le plan de cisaillement (ou rayon hydrodynamique) correspond à une sphère imaginaire autour de la particule dans laquelle le solvant bouge avec la particule lorsque les particules se déplacent dans la solution. La base théorique et la détermination du potentiel zêta sont connues de l'électrochimiste qui développe des dépôts par électrophorèse ; il peut être déduit de la mobilité électrophorétique. Pour la mesure directe du potentiel zêta, il existe différentes techniques et dispositifs commercialisés. Lorsque l'extrait sec est faible, on peut mesurer le potentiel zêta à l'aide d'un équipement de type Zetasizer Nano ZS de la société Malvern. Cet équipement mesure à l'aide de dispositifs optiques les vitesses de déplacement des particules en fonction du champ électrique qui leur est appliquée. Aussi, il faut que la solution soit très diluée pour permettre le passage de la lumière. Lorsque l'extrait sec est plus important, il est possible de mesurer le potentiel zêta à l'aide de techniques d'acoustophorèse, en utilisant par exemple un dispositif appelé « acoustosizer » de la société Colloidal Dynamics. La vitesse des particules est alors mesurée par des techniques acoustiques.

On entend par « dispersant » un composé apte à stabiliser la suspension colloïdale et notamment à éviter que les particules ne s'agglomèrent.

## 2. Description détaillée

Pour réaliser les électrodes de la batterie selon l'invention, on dépose par anaphorèse des nanoparticules des matériaux d'électrode à partir d'une suspension colloïdale de nanoparticules. En effet, les substrats en aluminium sont compatibles des procédés de dépôt anaphorétiques, contrairement au cuivre qui a tendance à se dissoudre en polarisation anodique ; cette dissolution en surface des bandes de cuivre ne permet pas de créer une base d'accroche stable pour les dépôts d'électrode.

Avantageusement, au moins l'une les couches d'électrodes anodique et cathodique est déposée sur le collecteur. Le deuxième collecteur peut être déposé sur la couche d'électrode déposée en dernière, par exemple par vapodéposition. Le mode de réalisation préféré consiste à déposer et la couche d'électrode anodique et la couche d'électrode cathodique sur un substrat comportant le collecteur, notamment par électrophorèse (et préférentiellement par anaphorèse) ; dans ce cas, la couche d'électrolyte pourra être déposée sur la couche anodique et/ou sur la couche cathodique, et il sera nécessaire de procéder par un empilement mécanique pour former la batterie.

Nous décrivons ici les étapes d'un procédé typique pour fabriquer une batterie selon l'invention.

## 1) Préparation du collecteur

Ce collecteur peut servir comme substrat pour la formation des couches d'électrodes anodiques et cathodiques, notamment par électrophorèse. Le substrat est une feuille d'aluminium ; son approvisionnement représente l'étape (d) d'un mode de réalisation principal du procédé selon l'invention. Il peut s'agir d'une feuille ou bande en aluminium, d'une épaisseur qui peut être par exemple de 15 $\mu$m, 7 $\mu$m ou 6 $\mu$m. L'épaisseur minimale est déterminée par la conductivité souhaitée ; elle sera normalement de l'ordre d'au moins 0,1 $\mu$m.

En effet, les substrats en aluminium sont compatibles des procédés de dépôt anaphorétiques, contrairement à certains autres métaux et en particulier le cuivre qui a tendance à se dissoudre en polarisation anodique. Cette dissolution en surface des bandes de cuivre ne permet pas de créer une base d'accroche stable pour les dépôts d'électrode. Or les inventeurs ont remarqué qu'avec les nanoparticules des matériaux de batterie, il était possible d'obtenir des suspensions colloïdales de particules monodisperses, sans ajouts de stabilisants, mais que ces nanoparticules étaient toujours chargées négativement et par conséquent compatibles avec un procédé de dépôts en anaphorèse. Ces suspensions ont été obtenues par exemple pour de faibles extraits secs, de préférence inférieur à 10 g/l et avantageusement de l'ordre de 4 g/l, dans un solvant de type alcool et/ou cétone.

Le substrat peut être préparé par exemple de la manière suivante : on approvisionne un feuillard d'aluminium d'une épaisseur comprise entre 5 et 20 $\mu$m, et de préférence de l'ordre de 15 $\mu$m. Le feuillard est ensuite positionné de manière à être maintenu « à plat ». La surface du feuillard d'aluminium est de préférence nettoyée, par exemple par immersion dans un bain de nettoyage. Ce nettoyage peut être par exemple réalisé par des immersions dans un bain de lessive de chez NGL Technologie sous ultrasons, suivi d'un rinçage à l'eau distillée.

Le feuillard est traité par électro-polissage afin de réduire son épaisseur, et/ou de supprimer les rugosités et microrugosités de surface. Ce traitement d'électro-polissage peut être réalisé dans une solution ayant la composition chimique suivante: 80% d'éthanol absolu, 13,8% d'eau distillée, 6,2% d'acide perchlorique à 70%. La tension appliquée est de 15V. La nature de la contre-électrode n'est pas critique. Si nécessaire, le bain de traitement peut être refroidi pour éviter les échauffements liés aux fortes densités de courant.

Pour une meilleure qualité de surface, d'autres formulations de bains peuvent être utilisées, comme par exemple, des bains à base de solutions de type EPS 1250 ou EPS 1300 de chez EP-Systems.

Après le traitement d'électro-polissage, la surface est rincée à l'eau distillée. L'épaisseur du feuillard à l'issue de ce traitement est généralement comprise entre 10 et 1 $\mu$m.

Ce feuillard peut être utilisé comme substrat d'anode et comme substrat de cathode dans le procédé selon l'invention. Dans la batterie, il joue le rôle de collecteur de courant d'anode et de collecteur de courant de cathode.

Optionnellement, un traitement de dépôt métallique, par exemple un nickelage, peut être réalisé directement sur la surface du feuillard juste après son traitement d'électro-polissage. Ce traitement peut être réalisé de différentes manières, soit par dépôt électrochimique, soit par immersion dans une solution contenant des sels du métal à déposer, soit les deux successivement. Le dépôt électrolytique peut être réalisé dans un bain de composition suivante: sulfamate de nickel à 300 g/l, $H_3BO_3$ à 30 g/l, $NiCl_2$ à 30 g/l. Le dépôt métallique, notamment le nickelage, est réalisé sur le feuillard en aluminium, dont la surface a été préalablement activée par électro-polissage sous une densité de courant de l'ordre de 2 A/dm$^2$, en utilisant une contre électrode. Dans le cas du nickelage elle peut être en nickel. Ce dépôt métallique, par exemple le nickelage, permet d'éviter la formation d'une couche d'oxyde à la surface de l'aluminium, et d'améliorer la qualité des contacts électriques, et l'adhérence des dépôts.

Le dépôt métallique, notamment le traitement de nickelage, peut être réalisé sur l'une des surfaces du feuillard d'aluminium aminci par électro-polissage, à savoir sur la surface destinée à être en contact avec l'électrode, ou sur les deux faces.

L'épaisseur de chacune des couches de cathode et d'anode est de préférence comprise entre 2 $\mu$m et 10 $\mu$m. L'épaisseur de la couche d'électrolyte est de préférence inférieure à 2 $\mu$m.

2) Préparation des suspensions

Un autre aspect clé du procédé selon l'invention est l'approvisionnement des suspensions colloïdales de nanoparticules pour le dépôt des couches par électrophorèse. Les inventeurs ont constatés qu'avec des nanoparticules des matériaux de batterie, et en particulier des matériaux qui seront décrits ci-dessous en plus grand détail, il est possible d'obtenir des suspensions colloïdales de particules monodisperses, sans ajouts de stabilisants, et que les nanoparticules étaient toujours chargées négativement et donc compatibles avec un dépôt électrophorétique en mode anaphorèse.

En ce qui concerne l'anaphorèse, on note que l'aluminium est stable dans les gammes de potentiels anodiques et inversement le cuivre est plutôt stable dans les gammes de potentiel cathodique. Par ailleurs, ces deux matériaux sont d'excellents conducteurs du courant. Cependant, l'aluminium reste moins cher que le cuivre et sa plus faible densité (2,70 g/cm$^3$ au lieu de 8,96 g/cm$^3$ pour le cuivre) contribue à réduire la masse des cellules batteries.

Les inventeurs ont remarqué qu'avec les nanoparticules des matériaux de batterie utilisées dans le cadre de la présente invention, il est possible d'obtenir des suspensions colloïdales stables de particules non agglomérées entre elles et/ou d'agglomérats de quelques particules, sans ajouts de stabilisants. Les particules et/ou agglomérats ont de préférence une taille inférieure à 100 nm, et plus préférentiellement inférieure à 50 nm.

Ces suspensions ont été obtenues pour de faibles extraits secs, compris entre 2 g/L et 20 g/L, de préférence entre 3 et 10 g/L, et plus particulièrement pour des extraits secs de l'ordre de 4g/l, dans un solvant organique à base d'alcool et/ou de cétone. Un alcool qui convient dans de nombreux cas est l'éthanol, une cétone qui convient dans de nombreux cas est l'acétone.

Ces suspensions colloïdales stables de particules sans ajout de stabilisant sont particulièrement préférées dans le cadre de la présente invention. L'ajout de stabilisants ou de cations dans la suspension pour modifier la charge de surface des nanoparticules afin de les rendre compatibles de polarisations cataphorétiques conduirait à polluer les dépôts ; en particulier, des stabilisants organiques, peu volatiles, risquent de conduire à des résidus organiques qui isolent électriquement les nanoparticules entre elles, augmentant ainsi la résistance ohmique de la batterie et, dans un cas extrême, interdisant ainsi toute réponse électrochimique. Les inventeurs ont observé que la stabilité des nano-colloïdes dépendait fortement de la taille des particules et de leur concentration (exprimée par l'extrait sec) dans la suspension. Lorsque la taille des particules avoisine la dizaine de nanomètres, la suspension peut être stable sans ajout de stabilisants. Sans vouloir être enfermé dans cette théorie, les inventeurs pensent que lorsque la surface spécifique de ces particules est forte et leur masse est faible, le bilan des interactions conduit à ce que le système se comporte comme un gaz réel susceptible de se condenser en donnant naissance à un cristal colloïdal. Les dépôts électrophorétiques de ces nanoparticules permettent de condenser à la surface du substrat cette phase dite de « cristal colloïdal ».

Le potentiel Zêta de telles suspensions est généralement inférieur à 40 mV, et plus particulièrement compris entre 25 et 40 mV. Cela pourrait signifier que de telles suspensions tendent à être instables, cependant les inventeurs ont constaté que l'emploi de ces suspensions pour le dépôt électrophorétique conduisait à des films déposés très bonne qualité.

Dans ce type de suspensions, les nanoparticules sont chargées négativement, elles sont donc compatibles des dépôts en anaphorèse. L'ajout de stabilisants ou de cations dans la suspension pour modifier la charge de surface des nanoparticules afin de les rendre compatibles de polarisations cataphorétiques pourrait conduire à polluer les dépôts. Des stabilisants organiques, peu volatiles pourraient conduire à isoler électriquement les nanoparticules interdisant ainsi toute réponse électrochimique.

Lorsque l'eau est utilisée comme solvant, des tensions de dépôt inférieures à 5 V doivent être privilégiées. En effet, au-delà de 5 V l'eau risque de subir une électrolyse donnant lieu à des productions de gaz sur les électrodes qui rendent les dépôts poreux et diminuent leur adhérence sur le substrat. Par ailleurs, les réactions galvaniques en milieu aqueux donnent lieu à la formation de cations métalliques susceptibles de polluer les dépôts.

Dans un mode de réalisation préféré, les dépôts se font en phase solvantée. Il est ainsi possible de travailler à des valeurs de tension plus élevées, augmentant ainsi les vitesses de dépôts.

Une fois la composition chimique cible souhaitée définie, i.e. nature de la poudre ou des mélanges de poudres, les nanoparticules sont mises en solution dans une phase liquide appropriée. Dans certains modes de réalisation, on ajoute un stabilisant afin d'obtenir une suspension dont le potentiel zêta est de préférence supérieur à 40 mV, et plus préférentiellement supérieur à 60 mV.

Parmi les stabilisants stériques susceptibles d'être utilisés, on peut citer notamment le polyéthylène imine (PEI), l'acide polyacrylique (PAA), l'acide citrique, la nitrocellulose sous réserve qu'ils soient solubles dans la solvant organique choisi.

Des stabilisations électrostatiques peuvent être réalisées par ajout d'iodure, par ajouts d'acides ou bases. L'acidification ou basification de la solution peut être réalisée par ajout de traces d'eau et d'acides lorsque la suspension est réalisée en phase solvantée.

Selon l'invention, les nanoparticules utilisées pour la réalisation du film mince de <u>cathode</u> sont choisies de manière préférée, mais non exhaustive, parmi un ou plusieurs des matériaux Mx suivants :

(i) les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ (où x est sélectionné parmi Al, Fe, Cr, Co, Rh, Nd, autres terres rares, et où 0 < x < 0,1), $LiFeO_2$, $LiMn_{1/3}Ni_{1/3}Co_{1/3}O_4$ ;
(ii) les phosphates $LiFePO_4$ $LiMnPO_4$, $LiCoPO_4$, $LiNiPO_4$, $Li_3V_2(PO_4)_3$ ;
(iii) toutes les formes lithiées des chalcogénides suivants : $V_2O_5$, $V_3O_8$, $TiS_2$, $TiO_yS_z$, $WO_yS_z$, $CuS$, $CuS_2$.

Selon l'invention, les nanoparticules utilisées pour la réalisation du film mince <u>d'anode</u> sont choisies de manière préférée, mais non exhaustive, parmi un ou plusieurs des matériaux suivants :

(v) les oxynitrures d'étain (de formule typique $SnO_xN_y$);
(vi) les oxynitrures mixtes de silicium et étain (de formule typique $Si_aSn_bOyN_z$ avec a>0, b>0, a+b≤2, 0<y≤4, 0<z≤3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b≤2, 0<c-10, 0<y<24, 0<z<17; $Si_aSn_bC_cO_yN_zX_n$ et $Si_aSn_bO_yN_zX_n$ avec Xn au moins un des éléments parmi F, Cl, Br, I, S, Se, Te, P, As, Sb, Bi, Ge, Pb.
(vii) les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu);
(viii) les oxydes $SnO_2$, $Li_4Ti_5O_{12}$, $SnB_{0,6}P_{0,4}O_{2,9}$.

L'électrolyte doit être un bon conducteur ionique mais également un isolant électrique. Selon l'invention, les nanoparticules utilisées pour la réalisation du film mince de l'<u>électrolyte</u> sont choisies de manière préférée parmi un ou plusieurs des matériaux Mx suivants :

(i) les composés lithiés à base d'oxynitrure de lithium et de phosphore (appelés LiPON) sous forme $Li_xPO_yN_z$ avec x ~2,8 et 2y+3z ~7,8 et 0,16 ≤ z ≤ 0,4, et en particulier le $Li_{2,9}PO_{3,3}N_{0,46}$, mais également toutes les variantes sous forme $Li_wPO_xNyS_z$ avec 2x+3y+2z = 5=w et 3,2 ≤ x ≤ 3,8, 0,13 ≤ y ≤ 0,4, 0 ≤ z ≤ 0,2, 2,9 ≤ w ≤ 3,3 ou sous forme $Li_tP_xAl_yO_uN_vS_w$ avec 5x+3y=5, 2u+3v+2w=5+t, 2,9≤t≤3,3, 0,94≤x≤0,84, 0,094≤y≤0,26, 3,2≤u≤3,8, 0,133≤v≤0,46, 0≤w≤0,2 ;
(ii) les composé lithiés à base d'oxynitrure de lithium, de phosphore et de silicium (appelés LiSiPON), et en particulier le $Li_{1,9}Si_{0,28}P_{1,0}O_{1,1}N_{1,0}$ ;
(iii) les oxynitrures de lithium de types LiBON, LiBSO, LiSiPON, LiSON, thio-LiSiCON, LiPONB (ou B, P et S représentent respectivement le bore, le phosphore et le soufre);
(iv) les composés $La_{0,51}Li_{0,34}Ti_{2,94}$, $Li_{3,4}V_{0,4}Ge_{0,6}O_4$, $Li_2O-Nb_2O_5$, $LiAlGaSPO_4$ ;
(v) les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où 0 < x < 1), $Li_{1+x+y}Al_xTi_{2-x}Si_yP_{3-y}O_{12}$ (où 0≤x≤1 et 0≤y≤1), $Li_{1+x+z}M_x(Ge_{1-y}Ti_y)_{2-x}Si_zP_{3-z}O_{12}$ (où 0 ≤ x ≤0,8 ; 0 ≤ y ≤ 1,0; 0 ≤ z ≤ 0,6), et en particulier les formulations 4,9Lil-34,1Li_2O-61B_2O_3, 0,30Li_2S-0,26B_2S_3-

0,44LiI, 60Li$_2$S-40SiS$_2$, 0,02Li$_3$PO$_4$-0,98(Li$_2$S-SiS$_2$), 2(Li$_{1,4}$Ti$_2$Si$_{0,4}$P$_{2,6}$0$_{12}$)-AlPO$_4$, 0,7Li$_2$S-0,3P$_2$S$_5$; sachant que les formulations à base des matériaux listés dans ce groupe (v) incluent notamment les formulations comprenant majoritairement (en masse) des matériaux listés dans ce groupe (v).

Pour la réalisation de l'anode ou de la cathode, on peut ajouter aux matériaux cités précédemment des nanoparticules de matériaux conducteurs électroniques, et en particulier de graphite, et/ou des nanoparticules de matériaux conducteurs des ions lithium, du type de ceux utilisés pour réaliser les films d'électrolyte. En effet, certains matériaux d'électrode sont de mauvais conducteurs ioniques et électriques, par conséquent lorsque les épaisseurs déposées sont supérieures à 0,5 μm l'électrode peut être trop résistive, et elle ne fonctionne plus. Or des épaisseurs de 1 à 10 μm sont généralement souhaitables pour les électrodes, afin d'avoir des batteries avec de bonnes densités d'énergie. Dans ce cas il est nécessaire de réaliser un co-dépôt de particules de matériaux d'électrode et de particules conductrices (ioniques et/ou électriques). Ainsi on obtient une batterie dans laquelle au moins une des dites couches d'électrodes comprend au moins un matériau actif d'électrode pour batterie à insertion du lithium et au moins un autre matériau qui est un conducteur électrique et/ou ionique.

3) Densification des couches

Le film, et en particulier le film d'électrode, déposé par électrophorèse peut être consolidé (densifié) thermiquement et/ou mécaniquement. La consolidation mécanique est une compression, par exemple par rouleaux (tel qu'un calandrage) ; elle peut être effectuée avant, pendant et/ou après la consolidation thermique. Le traitement de consolidation thermique peut induire une oxydation superficielle de l'aluminium, pouvant conduire dans certains cas à une forte résistance ohmique, et dans un cas extrême à l'absence de toute réponse électrochimique de la batterie. Les inventeurs ont trouvé que ce problème peut être surmonté de deux manières, qui peuvent être combinées : on peut effectuer une compression mécanique après ou pendant le traitement thermique, et dans ce cas avantageusement à une pression comprise entre 20 et 100 MPa et de préférence entre 30 et 80 MPa. On peut aussi utiliser une feuille d'aluminium nickelée qui minimise la formation d'une couche d'oxyde électriquement résistante.

L'obtention de couches électrophorétiques de très bonne qualité tel que décrit ci-dessus, et en particulier de couches compactes, permet de réduire la durée et la température des traitements thermiques et de limiter le retreint de ces traitements, et d'obtenir une structure nanocristalline homogène Ceci contribue à l'obtention de couches denses sans défauts. Ainsi, avec des nanoparticules déposées par électrophorèse on peut s'approcher de la densité théorique géométrique d'un empilement compact de sphères (74%).

Les inventeurs ont constaté que plus la taille des particules déposées diminue, plus la température du traitement thermique peut être diminuée. Il est ainsi possible de réaliser des dépôts en couches minces, ou relativement épaisses, avec des taux de porosité inférieure à 5% voire 2% sans avoir recours à des températures et/ou durées de traitement thermiques importants. Par ailleurs, cette technologie de compaction des dépôts à faible température réduit considérablement les risques de rétreint. Aussi, il n'est plus nécessaire d'avoir recours à des cycles de traitement thermique très complexes et coûteux pour consolider les dépôts de céramiques des films d'électrodes et d'électrolyte des batteries.

Pour des tailles de particules telles que celles utilisées dans le procédé selon l'invention, c'est l'augmentation des énergies de surface qui devient la principale force motrice de la densification par traitement thermique; cela se traduit par une forte baisse des températures de densification lorsque la taille des particules diminue. Cependant, pour que cette réduction des températures de consolidation soit effective, il peut être nécessaire que les particules soient au préalable compactées mécaniquement, et/ou déposées avec un empilement compact. Dans ce cas, la multiplication des contacts mécaniques entre ces particules permet de faciliter les processus diffusionnels à l'origine de la densification.

La forte compacité du dépôt obtenu par électrophorèse, et la faible quantité de solvant à évaporer limite très sensiblement le risque d'apparition de fissures après séchage. Par ailleurs, la faible taille des particules, leur grande surface spécifique tend à faciliter les étapes de consolidation par un traitement thermique (appelé parfois dans ce contexte : « frittage »). La densification du dépôt peut ainsi être réalisée à des températures ne dépassant pas de 0,7T$_f$, voire 0,5T$_f$ ou 0,3T$_f$ où T$_f$ est la température de fusion ou de décomposition (exprimée en °C) du matériau massif de composition chimique identique à celle de la particule déposée. Lorsque plusieurs particules sont co-déposées, il s'agit de considérer la plus fusible des deux. Pour réduire encore cette température de densification, il est également possible d'appliquer une compression mécanique à ce dépôt afin d'accroitre davantage sa compacité, et/ou créer des défauts ponctuels qui vont contribuer à accélérer le processus de densification, d'obtention de couches minces sans porosités.

D'une manière générale, dans le cadre de la présente invention, si une densification est effectuée, elle peut être thermique et / ou mécanique, et si on effectue à la fois une densification mécanique et thermique, la densification mécanique peut être effectuée avant, pendant ou après la densification thermique.

4) Architecture des batteries

Nous décrivons ici, à titre d'illustration et dans le but de permettre à l'homme du métier d'exécuter l'invention, différentes architectures de batteries selon l'invention ; cependant, la portée de l'invention n'est pas limitée à ces structures de batteries.

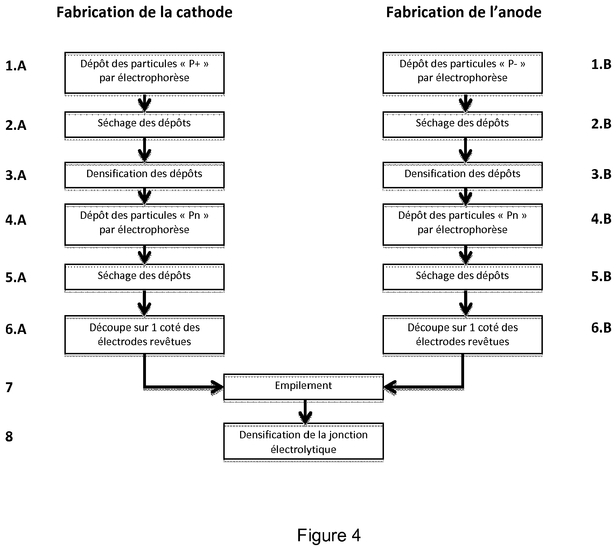

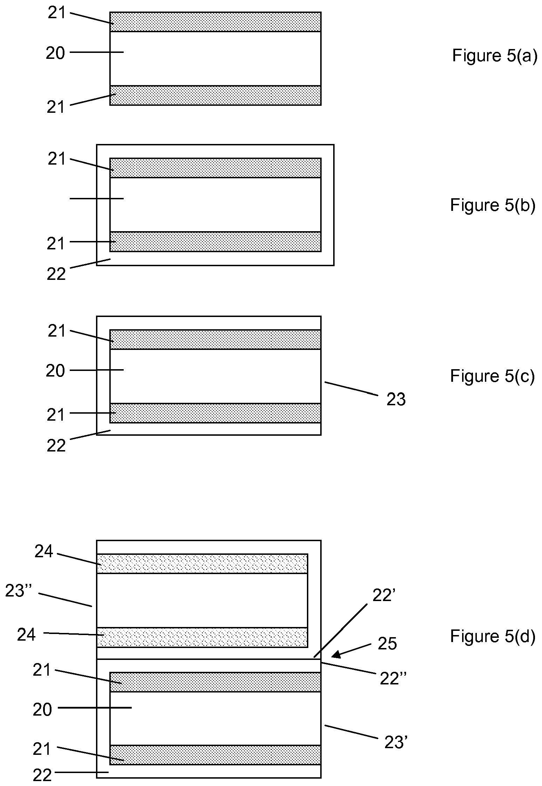

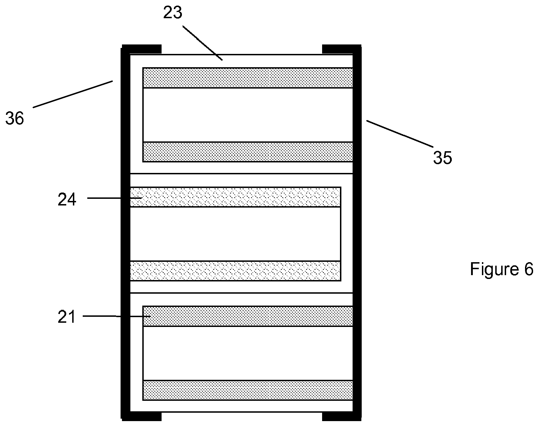

La figure 4 montre de manière schématique les étapes de fabrication d'une batterie selon l'invention par un mode de réalisation du procédé selon l'invention ; le produit obtenu à chaque étape est montré de manière schématique sur les figures 5(a) à 5(d) et 6. Aux étapes 1.A et 1.B on dépose par électrophorèse un film de cathode **24** et d'anode **21,** respectivement, sur le substrat conducteur **20.** Comme montré sur la figure 5(a) pour l'anode **21,** ce dépôt peut être effectué sur les deux faces du substrat conducteur. Aux étapes 2.A et 2.B on sèche le film déposé par électrophorèse. Aux étapes 3.A et 3.B on le densifie par un moyen mécanique et/ou thermique. Cette densification mécanique permet d'obtenir une densité supérieure à 90% de la densité théorique du corps massif, voire supérieure à 95%. Le séchage peut être fait avant ou après la densification mécanique.

A ce stade, il est important de rappeler qu'avec les techniques électrophorétiques, il est possible d'obtenir des dépôts ayant une très bonne compacité de départ. Ainsi, un tel dépôt ne présente qu'un faible retreint lors de la densification et donc peu ou pas de défauts dans les films, même lorsqu'ils sont réalisés sur de larges surfaces et fortes épaisseurs. Par ailleurs, cette étape de densification se fera d'autant plus facilement à faible température, pour des temps courts, que le film de départ sera compact avec des particules de faibles dimensions. Pour accroître davantage la compacité avant frittage, il est avantageux d'utiliser des particules de faibles dimensions (<30 nm) et/ou de formes parallélépipédiques.

Aux étapes 4.A et 4.B, on dépose sur l'anode **21** et sur la cathode **24,** respectivement, le film d'électrolyte **22.** Son épaisseur peut être de l'ordre de 1 $\mu$m. Ce dépôt recouvre également les bords (i.e. les tranches) des électrodes, comme montré de manière schématique sur la figure 5(b). Cette isolation des bords des électrodes évite à la fois le risque de court-circuit et le risque de courants de fuite. Aux étapes 5.A et 5.B bis on sèche ce dépôt d'électrolyte.

Aux étapes 6.A et 6.B, on découpe un bord des électrodes. De manière avantageuse, on découpe le bord lié à la bande, afin de laisser trois arêtes revêtues d'électrolyte sur la tranche. Cet électrolyte étant un diélectrique, il permettra lors de la prochaine étape d'empilement de ne faire apparaître que les contacts anodiques d'un côté de la cellule, respectivement cathodiques sur l'autre, afin de réaliser des assemblages en parallèle des éléments de batterie afin de constituer une cellule batterie de plus forte capacité. La figure 5(c) montre schématiquement une telle section de cellule après découpe : le substrat **20** a été revêtu (ici sur les deux faces) d'un film de cathode **21** et coupé sur une tranche **23.** A l'étape 7 on réalise l'empilement de manière à ce que sur deux côtés opposés de l'empilement on trouve alternativement une succession de bords **23'** d'anode **21** découpée et de bords de cathode **24** revêtu d'électrolyte **22.** La figure 6 montre un empilement de deux substrats **20,** l'un portant sur les deux faces un film d'anode **21,** l'autre un film de cathode **24,** les deux faces du film d'électrolyte **22',22"** étant posée l'une sur l'autre pour former une interface commune **25.** A l'étape 8 cet empilement peut être densifié afin d'obtenir une bonne liaison (« soudure ») entre les deux faces **22',22"** de la couche d'électrolyte **22.** Si la température de fusion des couches d'anode et de cathode est significativement supérieure à celle de la couche d'électrolyte, il est préférable d'effectuer la densification thermique les couches d'anode et de cathode séparément, avant l'empilage, puis d'effectuer une densification thermique de l'empilement pour densifier la couche d'électrolyte.

Une fois l'empilement réalisé, des terminaisons (contacts électriques) **35,36** sont ajoutés au niveau où les collecteurs de courant cathodiques, respectivement anodiques sont apparents (non revêtus d'électrolyte isolant). Ces zones de contact peuvent être sur les côtés opposés de l'empilement pour collecter de courant ainsi que cela est représenté sur la figure 6, mais également sur les mêmes cotés ou sur des cotés adjacents.

Dans un mode de réalisation particulier, l'empilement illustré sur la figure 6 est réalisé par enroulement de deux demi-électrodes (dont une est montrée sur la figure 5(c)) entre elles sur un mandrin afin d'obtenir une cellule forme cylindrique. Comme pour la configuration de la figure 6, les connexions anodiques sortent alors d'un côté, alors que les connexions cathodiques sortent de l'autre côte.


**EXEMPLES**


**Exemple 1 :**


a) Préparation du substrat

On approvisionne un feuillard d'aluminium de 15 $\mu$m d'épaisseur. Il est placé dans un dérouleur et positionné sur un cadre de maintien, de manière à créer une structure rigide de maintien du feuillard en aluminium sans le froisser. Ce cadre de maintien présente une surface externe isolante ; en revanche, ses surfaces internes conductrices sont au contact électrique avec le feuillard en aluminium et permettent de lui imposer un potentiel. Le feuillard d'aluminium dans son cadre est ensuite immergé dans un bain de nettoyage de la surface. Ce nettoyage peut être par exemple réalisé par des immersions dans un bain de lessive appropriée (fournie par la société NGL Technologie) sous ultrasons, suivi d'un rinçage à l'eau distillée.

Une fois la surface nettoyée, on réalise un traitement d'électropolissage afin de réduire l'épaisseur du substrat, et/ou supprimer les rugosités et microrugosités de surface. Ce traitement d'électropolissage peut être réalisé dans une solution ayant la composition chimique suivante: 80% d'éthanol absolu, 13,8% d'eau distillée, 6,2% d'acide perchlorique à 70%. L'électropolissage de l'aluminium a été réalisé avec une polarisation sous 15V avec une contre-électrode en plomb. Le bain de traitement a été refroidi pour éviter les échauffements liés aux fortes densités de courant.

Pour une meilleure qualité de surface, d'autres formulations de bain peuvent être utilisées, comme par exemple, des bains à base de solutions de type EPS 1250 ou EPS 1300 fournies par la société EP-Systems.

Après le traitement d'électropolissage, la surface a été rincée à l'eau distillée.

b) Réalisation d'une suspension colloïdale de nanoparticules de $Li_4Ti_5O_{12}$

Afin de réaliser une électrode anodique en couche mince sur le substrat d'aluminium préalablement préparé, on a réalisé une suspension colloïdale de nanoparticules de $Li_4Ti_5O_{12}$, et cela sans ajouts de stabilisants, afin de garantir un excellent niveau de pureté de l'électrode. Cette suspension a été préparée dans l'alcool par broyage-dispersion de nanoparticules de $L_{14}Ti_5O_{12}$. Les nanoparticules de $Li_4Ti_5O_{12}$ ont été achetées chez la société Aldrich, puis broyées dans de l'alcool éthylique avec une concentration de 10 g/l. Après cette étape de broyage-dispersion la suspension a été passée aux ultrasons puis elle a été laissée décanter. On a prélevé uniquement le surnageant de la suspension après décantation afin d'être certain d'obtenir une suspension colloïdale monodisperse de nanoparticules, sans agglomérats de tailles supérieurs à 100 nm.

Ainsi on a obtenu une suspension stable de nanoparticules de $Li_4Ti_5O_{12}$ sans ajouts de stabilisant.

c) Réalisation d'une électrode en couches minces, entièrement solide

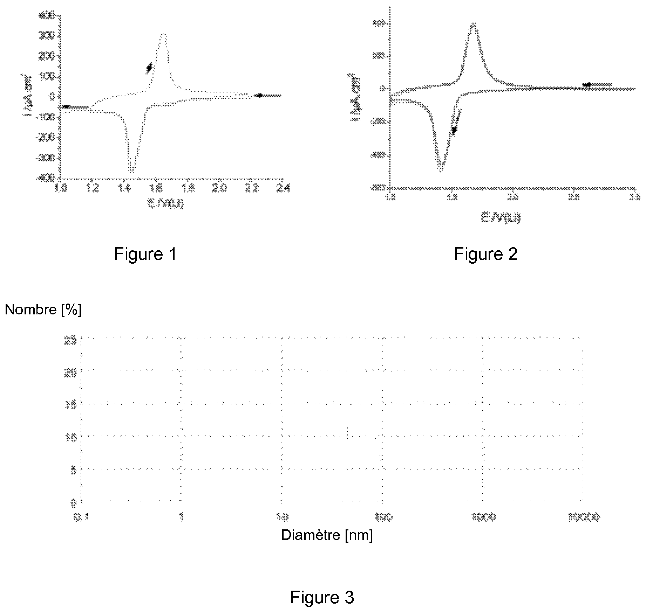

L'électrode anodique de $Li_4Ti_5O_{12}$ a été déposée en couche mince par électrophorèse des nanoparticules directement sur le feuillard d'aluminium électro polie, avec un champ électrique de 10V/cm. Ainsi on a obtenu un dépôt compact d'environ 0,5 micron d'épaisseur après seulement quelques secondes d'anaphorèse. La couche déposée a ensuite été recuite à 500°C pendant 1 heure puis pressée sous 50 MPa. Une courbe de voltampérométrie cyclique a été tracée à 0,1 V/sec sur cette électrode afin de valider ses propriétés d'insertion vis-à-vis des ions lithium (voir la figure 1).

d) Variantes

Dans une première variante, on a réalisé sur la surface fraîchement traitée par électropolissage et rincée un traitement de nickelage. Le bain avait la composition suivante : Sulfamate de nickel à 300 g/l, $H_3BO_3$ à 30 g/l, $NiCl_2$ à 30 g/l. La densité de courant lors du dépôt était de l'ordre de 2 A/dm$^2$, en utilisant une contre électrode en nickel.

Dans une autre variante, la suspension de nanoparticules de $Li_4Ti_5O_{12}$ a été diluée jusqu'à un extrait sec de 2g/l, et de l'acide citrique a été ajouté à la suspension à une concentration de $1.10^{-3}$ M. La suspension a été mise sous ultrasons, et le surnageant a été récupéré après décantation. Le dépôt électrophorétique a été consolidé après séchage sous 50 MPa. L'électrode ainsi obtenue est entièrement solide et adhère sur le substrat (sans avoir à ajouter de liants, type PVDF, dans le dépôt).

Une courbe de voltampérométrie cyclique a été tracée à 0,1 V/sec sur cette électrode afin de valider ses propriétés d'insertion vis-à-vis des ions lithium (voir la figure 2).

**Exemple 2 :**

Ces exemples concernent la préparation de suspensions colloïdales de nanoparticules de matériaux d'électrode cathodique et de matériaux d'électrolyte, qui est une des étapes clé du procédé selon l'invention.

Exemple 2a : Réalisation d'une suspension colloïdale de $LiMn_{1,5}Ni_{0,4}Cr_{0,1}O_4$

Des poudres nanométriques de $LiMn_{1,5}Ni_{0,4}Cr_{0,1}O_4$ ont été synthétisées à l'aide de la méthode décrite ci-après : Une poudre de $Li_2CO_3$ est dissoute par petite quantité dans un mélange d'acide citrique et d'éthylène glycol chauffé à 70°C. On observe un dégagement de $CO_2$ à chaque portion additionnée. La température du mélange est portée à 90°C, puis on ajoute ensuite en quantité stoechiométrique du $Mn(NO_3)_2.4H_2O$, du $Ni(NO_3)_2.6H_2O$ et du $Cr(NO_3)_2.9H_2O$ à cette dernière solution puis on augmente la température du mélange à 140°C jusqu'à l'obtention d'une masse dure bullée. Cette dernière est ensuite passée à l'étuve à 250°C jusqu'à l'obtention d'une poudre. La poudre obtenue est enfin calcinée à 800°C pendant 6 heures.

Ces nanopoudres ont été broyées et dispersées dans de l'alcool afin d'obtenir une suspension à 20 g/l de $LiMn_{1,5}Ni_{0,4}Cr_{0,1}O_4$. Le broyage dispersion a été conduit jusqu'à ce que la taille des particules en suspension atteigne 30 nm. Cette suspension a ensuite été diluée dans un solvant de type cétone afin d'obtenir une suspension à 5g/l. Elle peut être utilisée pour le dépôt d'une électrode cathodique.

Exemple 2b : Réalisation d'une suspension colloïdale de $Li_{1,3}Al_{0,3}Ti_{1,7}(PO_4)_3$

Pour réaliser la suspension colloidale contenant des particules de l'électrolyte, on synthétise tout d'abord des poudres nanométriques du $Li_{1,3}Al_{0,3}Ti_{1,7}(PO_4)_3$ en utilisant le procédé décrit dans la publication "thin-film lithium-ion battery derived from $Li_{1,3}Al_{0,3}Ti_{1,7}(PO_4)_3$ sintered pellets" par Xiao er al., paru dans Trans. Nonferrous Me. Soc. China 16(2006), p. 281-285.

Les poudres nanométriques de $Li_{1,3}Al_{0,3}Ti_{1,7}(PO_4)_3$ ont été mises en suspension colloïdales dans l'alcool éthylique par broyage-dispersion. Aucun stabilisant n'a été ajouté à la suspension colloïdale, qui avait un extrait sec de 10 g/l. La suspension ainsi obtenue était parfaitement stable et les mesures DLS ci-après illustrent la distribution de tailles de particules en suspension: (voir la figure 3). La taille moyenne des particules en suspension est de 30 nm. Comme précédemment, afin d'être certain de ne pas prélever d'agglomérats, nous travaillons quasi exclusivement avec les surnageants des suspensions après décantation.

**Exemple 3 :**

1- Fabrication de la cathode:

A partir de la suspension colloïdale de nanopoudres de $LiMn_{1,5}Ni_{0,4}Cr_{0,1}O_4$ préparée dans l'exemple 2-a précédent, nous réalisons un dépôt par anaphorèse des nanoparticules de $LiMn_{1,5}Ni_{0,4}Cr_{0,1}O_4$ sur un substrat d'aluminium d'épaisseur initiale 15 $\mu$m qui a été amincît et dont la surface a été lissée et décapée par électropolissage. Les conditions de dépôt utilisées étaient de 90V/cm ce qui a permis d'obtenir un dépôt d'environ un micron après seulement quelques secondes d'anaphorèse.

Ce dépôt a ensuite été séché et densifié par un chauffage sous pression uniaxiale.

2- Fabrication de l'anode:

Nous avons réalisé une suspension colloïdale de nanoparticules de $Li_4Ti_5O_{12}$ et de nanoparticules de noir de carbone et cela sans ajouts de stabilisants, afin de garantir un excellent niveau de pureté de l'électrode. Cette suspension a été préparée dans l'alcool par broyage-dispersion de nanoparticules de $Li_4Ti_5O_{12}$ et de carbone. Les nanoparticules de $Li_4Ti_5O_{12}$ ont été achetées chez la société Aldrich, les nanoparticules de noir de carbone de type Ketjenblack de chez Akzo Nobel, puis broyées ensembles dans de l'alcool éthylique avec une concentration de 10 g/l. Après cette étape de broyage-dispersion la suspension a été passée aux ultrasons puis elle a été laissée décanter. On a prélevé uniquement le surnageant de la suspension après décantation afin d'être certain d'obtenir une suspension colloïdale monodisperse de nanoparticules, sans agglomérats de tailles supérieurs à 100 nm.

A partir de cette suspension colloïdale nous réalisons un dépôt par anaphorèse des nanoparticules contenues dans la suspension sur un substrat d'aluminium d'épaisseur initiale 15 $\mu$m qui a été amincît et dont la surface a été lissée et décapée par électropolissage. Les conditions de dépôt utilisées étaient de 10V/cm ce qui a permis d'obtenir un dépôt d'environ d'un peu moins d'un micron après seulement quelques secondes d'anaphorèse.

Ce dépôt a ensuite été séché et densifié par un chauffage sous pression uniaxiale.

3- Assemblage de la cellule batterie:

Les deux électrodes ont ensuite été recouvertes d'un film mince d'électrolyte, déposé par électrophorèse à partir de la suspension décrite dans l'exemple 2-b. Ce film de nanoparticules de $Li_{1,3}Al_{0,3}Ti_{1,7}(PO_4)_3$ a été obtenu sous un champ de 10V/cm pendant 30 secondes.

Les deux demi-électrodes recouvertes du film mince de nanoparticules d'électrolyte sont ensuite assemblées en appliquant conjointement les deux faces de chacune des électrodes recouvertes d'électrolyte puis en leur faisant subir un traitement thermique à 300°C sous pression uniaxiale.

Nous avons ainsi réalisé une batterie en couche mince entièrement solide, dotée de collecteur entièrement en aluminium.

**Revendications**

1. Batterie en couches entièrement solides, comprenant un collecteur de courant d'anode, une couche d'électrode anodique, une couche d'électrolyte, une couche d'électrode cathodique, un collecteur de courant de cathode, **caractérisée en ce que** le collecteur de courant d'anode et le collecteur de courant de cathode sont en feuille d'aluminium, ladite feuille d'aluminium pouvant être amincie par électro-polissage, et **en ce que** les couches d'électrodes et la couche d'électrolyte ont été déposés car électrophorèse.

2. Batterie selon la revendication 1, **caractérisée en ce que** ladite feuille d'aluminium est recouverte d'un dépôt métallique sur la face en contact avec les électrodes, et possiblement aussi sur l'autre face, ledit dépôt métallique étant sélectionné dans le groupe constitué par le nickel, un alliage de nickel, l'argent, l'étain, l'or, le zinc, ce dépôt étant appliqué avant le dépôt des couches d'électrode..

3. Batterie selon la revendication 1 ou 2, **caractérisée en ce que** ladite feuille d'aluminium présente une épaisseur inférieur à 5 $\mu$m, plus préférentiellement inférieure à 2 $\mu$m, et **en ce que** l'épaisseur des électrodes est comprise entre 0,5 $\mu$m et 20 $\mu$m.

4. Batterie selon l'une quelconque des revendications 1 à 3, **caractérisée en ce que** la taille moyenne des particules dans les couches d'électrodes et d'électrolyte est comprise entre 1 nm et 100 nm, de préférence comprise entre 5 nm et 30 nm.

5. Batterie selon l'une quelconque des revendications 1 à 4, **caractérisée en ce que** les couches d'électrodes sont déposées chacune à partir d'une suspension de nanoparticules comprenant au moins un matériau actif d'électrode pour batterie à insertion du lithium, et au moins un matériau qui est un conducteur électrique et/ou un conducteur ionique.

6. Batterie selon l'une quelconque des revendications 1 à 5, **caractérisée en ce qu'**au moins une des dites couches d'électrodes comprend au moins un matériau actif d'électrode pour batterie à insertion du lithium et au moins un autre matériau qui est un conducteur électrique et/ou ionique.

7. Batterie selon l'une quelconque des revendications 1 à 6, **caractérisée en ce que** le(s) matériau(x) formant la couche d'électrode anodique est (sont) sélectionné(s) dans le groupe formé par :

   (i) les oxynitrures d'étain (de formule typique $SnO_xN_y$);
   (ii) les oxynitrures mixtes de silicium et étain (de formule typique $Si_aSn_bO_yN_z$ avec a>0, b>0, a+b$\leq$2, 0<y$\leq$4, 0<z$\leq$3) (appelés aussi SiTON), et en particulier le $SiSn_{0,87}O_{1,2}N_{1,72}$ ; ainsi que les oxynitrures sous la forme $Si_aSn_bC_cO_yN_z$ avec a>0, b>0, a+b$\leq$2, 0<c-10, 0<y<24, 0<z<17; $Si_aSn_bC_cO_yN_zX_n$ et $Si_aSn_bO_yN_zX_n$ avec Xn au moins un des éléments parmi F, CI, Br, I, S, Se, Te, P, As, Sb, Bi, Ge, Pb.
   (iii) les nitrures de type $Si_xN_y$ (en particulier avec x=3 et y=4), $Sn_xN_y$ (en particulier avec x=3 et y=4), $Zn_xN_y$ (en particulier avec x=3 et y=4), $Li_{3-x}M_xN$ (avec M = Co, Ni, Cu);
   (iv) les oxydes $SnO_2$ $Li_4Ti_5O_{12}$, $SnB_{0,6}P_{0,4}O_{2,9}$.

8. Batterie selon l'une quelconque des revendications 1 à 7, **caractérisée en ce que** le(s) matériau(x) formant la couche d'électrode cathodique est (sont) sélectionné(s) dans le groupe formé par :

   (a) les oxydes $LiMn_2O_4$, $LiCoO_2$, $LiNiO_2$, $LiMn_{1,5}Ni_{0,5}O_4$, $LiMn_{1,5}Ni_{0,5-x}X_xO_4$ (où x est sélectionné parmi Al, Fe, Cr, Co, Rh, Nd, autres terres rares, et où 0 < x < 0,1), $LiFeO_2$ $LiMn_{1/3}Ni_{1/3}Co_{1/3}O_4$ ;
   (b) les phosphates $LiFePO_4$, $LiMnPO_4$, $LiCoPO_4$, $LiNiPO_4$, $Li_3V_2(PO_4)_3$ ;
   (c) toutes les formes lithiées des chalcogénides suivants : $V_2O_5$, $V_3O_8$, $TiS_2$, $TiO_yS_z$, $WO_yS_z$, CuS, $CuS_2$.

9. Batterie selon l'une quelconque des revendications 1 à 8, **caractérisée en ce que** le(s) matériau(x) formant la couche d'électrolyte est (sont) sélectionné(s) dans le groupe formé par :

   (i) les composés lithiés à base d'oxynitrure de lithium et de phosphore (appelés LiPON) sous forme $Li_xPO_yN_z$ avec x ~2,8 et 2y+3z ~7,8 et 0,16 $\leq$ z $\leq$ 0,4, et en particulier le $Li_{2,9}PO_{3,3}N_{0,46}$, mais également toutes les variantes sous forme $Li_wPO_xNyS_z$ avec 2x+3y+2z = 5=w et 3,2 $\leq$ x $\leq$ 3,8, 0,13 $\leq$ y $\leq$ 0,4, 0 $\leq$ z $\leq$ 0,2, 2,9 $\leq$ w $\leq$ 3,3 ou sous forme $Li_tP_xAl_yO_uN_vS_w$ avec 5x+3y=5, 2u+3v+2w=5+t, 2,9$\leq$t$\leq$3,3, 0,94$\leq$x$\leq$0,84, 0,094$\leq$y$\leq$0,26, 3,2$\leq$u$\leq$3,8, 0,13$\leq$v$\leq$0,46, 0$\leq$w$\leq$0,2.

(ii) les composés lithiés à base d'oxynitrure de lithium, de phosphore et de silicium (appelés LiSiPON), et en particulier le $Li_{1,9}Si_{0,28}P_{1,0}O_{1,1}N_{1,0}$ ;

(iii) les oxynitrures de lithium de types LiBON, LiBSO, LiSiPON, LiSON, thio-LiSiCON, LiPONB (ou B, P et S représentent respectivement le bore, le phosphore et le soufre);

(iv) les composés $La_{0,51}Li_{0,34}Ti_{2,94}$, $Li_{3,4}V_{0,4}Ge_{0,6}O_4$, $Li_2O-Nb_2O_5$, $LiAlGaSPO_4$ ;

(v) les formulations à base de $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où 0 < x < 1), $Li_{1+x+y}Al_xTi_{2-x}SiyP_{3-y}O_{12}$ (où $0{\leq}x{\leq}1$ et $0{\leq}y{\leq}1$), $Li_{1+x+z}M_x(Ge_{1-y}Ti_y)_{2-x}Si_zP_{3-z}O_{12}$ (où $0 \leq x \leq 0,8$ ; $0 \leq y \leq 1,0$ ; $0 \leq z \leq 0,6$), et en particulier les formulations 4,9LiI-34,1$Li_2O$-61$B_2O_3$, 0,30$Li_2S$-0,26$B_2S_3$-0,44LiI, 60$Li_2S$-40$SiS_2$, 0,02$Li_3PO_4$-0,98($Li_2S$-$SiS_2$), 2($Li_{1,4}Ti_2Si_{0,4}P_{2,6}O_{12}$)$AlPO_4$, 0,7$Li_2S$-0,3$P_2S_5$.

10. Batterie en couches entièrement solides, **caractérisée en ce qu'**elle comprend une pluralité des batteries selon l'une quelconque des revendications 1 à 9, empilées.

11. Procédé de fabrication de batteries en couches minces entièrement solides selon l'une quelconque des revendications 1 à 10, comprenant les étapes de :

(a) Approvisionnement d'une première suspension colloïdales « *SP+* » contenant des particules « *P+* » dite de « matériaux de cathode » ;

(b) Approvisionnement d'une deuxième suspension colloïdale « *SP-* » contenant des particules « *P-* » dite de « matériaux d'anode » ;

(c) Approvisionnement d'une troisième suspension colloïdale « *SPn* » de particules *« Pn »* dite de « matériaux d'électrolyte solide » conductrice ;

(d) Approvisionnement de substrats conducteurs sous la forme d'une bande ou d'une feuille d'aluminium ;

(e) Immersion d'un premier substrat conducteur dans un bain de ladite suspension *SP+* contenant des particules P+ de matériaux de cathode en présence d'une contre-électrode, suivi de l'application d'une tension électrique entre ledit premier substrat conducteur et ladite contre-électrode de manière à obtenir un dépôt électrophorétique de particules *P+* de matériaux de cathode sur ledit premier substrat conducteur ;

(f) Immersion d'un deuxième substrat conducteur dans un bain de ladite suspension *SP* contenant des particules P- de matériaux d'anode en présence d'une contre-électrode, suivi de l'application d'une tension électrique entre ledit deuxième substrat conducteur et ladite contre-électrode de manière à obtenir un dépôt électrophorétique de particules *P-* de matériaux d'anode sur ledit substrat conducteur ;

(g) Immersion du premier substrat revêtu à l'étape (e) et/ou du deuxième substrat revêtu à l'étape (f) dans un bain de ladite suspension *SPn* de particules *Pn* de matériaux d'électrolyte solide en présence d'une contre-électrode, suivi de l'application d'une tension électrique entre ledit premier et/ou deuxième substrat revêtu et la contre-électrode de manière à obtenir un dépôt électrophorétique de particules de matériaux d'électrolyte solide inorganique sur ledit ou lesdits substrat(s) ;

(h) Empilement des substrats de cathode et d'anode pour obtenir une batterie.

12. Procédé selon la revendication 11, **caractérisé en ce que** les dépôts électrophorétiques des particules SP+ et/ou SP- et/ou SPn sont effectués par anaphorèse.

13. Procédé selon la revendication 11 ou 12, **caractérisé en ce que** le potentiel zéta desdites suspensions colloïdales est compris entre 25 et 40 mV.

14. Procédé selon l'une quelconque des revendications 11 à 13, **caractérisé en ce que** la taille moyenne $D_{50}$ des particules de matériau d'anode, de cathode et/ou d'électrolyte solide dans lesdites suspensions colloïdales est inférieure à 1 $\mu$m, de préférence inférieure à 100 nm et encore plus préférentiellement inférieure ou égale à 30 nm.

**Patentansprüche**

1. Reine Festkörper-Schichtbatterie, umfassend einen Anodenstromkollektor, eine Anodenelektrodenschicht, eine Elektrolytschicht, eine Kathodenelektrodenschicht, einen Kathodenstromkollektor, **dadurch gekennzeichnet, dass** der Anodenstromkollektor und der Kathodenstromkollektor aus Aluminiumfolie sind, wobei die Aluminiumfolie durch Elektropolieren ausgedünnt sein kann, und dadurch, dass die Elektrodenschichten und die Elektrolytschicht durch Elektrophorese abgeschieden wurden.

2. Batterie nach Anspruch 1, **dadurch gekennzeichnet, dass** die Aluminiumfolie mit einer metallischen Abscheidung auf der Fläche, die mit den Elektroden in Kontakt ist, und gegebenenfalls auch auf der anderen Fläche bedeckt ist, wobei die metallische Abscheidung ausgewählt ist aus der Gruppe bestehend aus Nickel, einer Nickellegierung, Silber, Zinn, Gold, Zink, wobei diese Abscheidung vor dem Abscheiden der Elektrodenschichten aufgebracht wird.

3. Batterie nach Anspruch 1 oder 2, **dadurch gekennzeichnet, dass** die Aluminiumfolie eine Dicke von weniger als 5 $\mu$m, vorzugsweise weniger als 2 $\mu$m aufweist, und dadurch, dass die Dicke der Elektroden im Bereich zwischen 0,5 $\mu$m und 20 $\mu$m beträgt.

4. Batterie nach einem der Ansprüche 1 bis 3, **dadurch gekennzeichnet, dass** die mittlere Größe der Teilchen in den Elektrodenschichten und der Elektrolytschicht im Bereich zwischen 1 nm und 100 nm, vorzugsweise im Bereich zwischen 5 nm und 30 nm beträgt.

5. Batterie nach einem der Ansprüche 1 bis 4, **dadurch gekennzeichnet, dass** die Elektrodenschichten jede ausgehend von einer Suspension von Nanoteilchen abgeschieden sind, die mindestens ein aktives Elektrodenmaterial für Batterien mit Lithiumeinlagerung, und mindestens ein Material umfasst, das ein elektrischer Leiter und/oder ein Ionenleiter ist.

6. Batterie nach einem der Ansprüche 1 bis 5, **dadurch gekennzeichnet, dass** mindestens eine der Elektrodenschichten mindestens ein aktives Elektrodenmaterial für Batterien mit Lithiumeinlagerung, und mindestens ein anderes Material umfasst, das ein elektrischer und/oder Ionenleiter ist.

7. Batterie nach einem der Ansprüche 1 bis 6, **dadurch gekennzeichnet, dass** das/die Material(ien), das/die die Anodenelektrodenschicht bildet/bilden, ausgewählt ist/sind aus der Gruppe, die gebildet wird von:

(i) den Zinn-Oxynitriden (der typischen Formel $SnO_xN_y$);
(ii) den gemischten Silizium- und Zinn-Oxynitriden (der typischen Formel $Si_aSn_bO_yN_z$, wobei a > 0, b > 0, a + b ≤ 2, 0 < y ≤ 4, 0 < z ≤ 3) (auch SiTON genannt), und insbesondere $SiSn_{0,87}O_{1,2}N_{1,72}$; sowie den Oxynitriden in der Form $Si_aSn_bC_cO_yN_z$, wobei a > 0, b > 0, a + b ≤ 2, 0 < c - 10, 0 < d ≤ 4, 0 < z < 17; $Si_aSn_bC_cO_yN_zX_n$ und $Si_aSn_bO_yN_zX_n$, wobei Xn mindestens eines der Elemente ist aus F, Cl, Br, I, S, Se, Te, P, As, Sb, Bi, Ge, Pb;
(iii) den Nitriden vom Typ $Si_xN_y$ (insbesondere wobei x = 3 und y = 4), $Sn_xN_y$ (insbesondere wobei x = 3 und y = 4), $Zn_xN_y$ (insbesondere wobei x = 3 und y = 4), $Li_{3-x}M_xN$ (wobei M = Co, Ni, Cu);
(iv) den $SnO_2$-, $Li_4Ti_5O_{12}$-, $SnB_{0,6}P_{0,4}O_{2,9}$-Oxiden.

8. Batterie nach einem der Ansprüche 1 bis 7, **dadurch gekennzeichnet, dass** das/die Material(ien), das/die die Kathodenelektrodenschicht bildet/bilden, ausgewählt ist/sind aus der Gruppe, die gebildet wird von:

(a) den $LiMn_2O_4$-, $LiCoO_2$-, $LiNiO_2$-, $LiMn_{1,5}Ni_{0,5}O_4$-, $LiMni_{1,5}Ni_{0,5-x}X_xO_4$- (wobei x aus Al, Fe, Cr, Co, Rh, Nd, anderen seltenen Erden ausgewählt ist und wobei 0 < x < 0,1), $LiFeO_2$-, $LiMn_{1/3}Ni_{1/3}Co_{1/3}O_4$-Oxiden;
(b) den $LiFePO_4$-, $LiMnPO_4$-, $LiCoPO_4$-, $LiNiPO_4$-, $Li_3V_2(PO_4)_3$-Phosphaten;
(c) allen lithiierten Formen der folgenden Chalkogenide: $V_2O_5$, $V_3O_8$, $TiS_2$, $TiO_yS_z$, $WO_yS_z$, CuS, $CuS_2$.

9. Batterie nach einem der Ansprüche 1 bis 8, **dadurch gekennzeichnet, dass** das/die Material(ien), das/die die Elektrolytschicht bildet/bilden, ausgewählt ist/sind aus der Gruppe, die gebildet wird von:

(i) den lithiierten Verbindungen auf Basis von Lithium-und Phosphor-Oxynitrid (LiPON genannt), in der Form $Li_xPO_yN_z$, wobei x ~2,8 und 2y + 3z ~7,8 und 0,16 ≤ z ≤ 0,4, und insbesondere $Li_{2,9}PO_{3,3}N_{0,46}$, aber ebenfalls allen Varianten in der Form $Li_wPO_xN_yS_z$, wobei 2x + 3y + 2z = 5 = w und 3,2 ≤ x ≤ 3,8, 0,13 ≤ y ≤ 0,4, 0 ≤ z ≤ 0,2, 2,9 ≤ w ≤ 3,3, oder in der Form $Li_tP_xAl_yO_uN_vS_w$, wobei 5x + 3y = 5, 2u + 3v + 2w = 5 + t, 2,9 ≤ t ≤3,3, 0,94 ≤ x ≤ 0,84, 0,094 ≤ y ≤ 0,26, 3,2 ≤ u ≤ 3,8, 0,13 ≤ v ≤ 0,46, 0 ≤ w ≤ 0,2;
(ii) den lithiierten Verbindungen auf Basis von Lithium-, Phosphor- und Silizium-Oxynitrid (LiSiPON genannt), und insbesondere $Li_{1,9}Si_{0,28}P_{1,0}O_{1,1}N_{1,0}$;
(iii) den Lithium-Oxynitriden der Typen LiBON, LiBSO, LiSiPON, LiSON, Thio-LiSiCON, LiPONB (wobei B, P und S jeweils für Bor, Phosphor und Schwefel stehen);
(iv) den $La_{0,51}Li_{0,34}Ti_{2,94}$-, $Li_{3,4}V_{0,4}Ge_{0,6}O_4$-, $Li_2O-Nb_2O_5$-, $LiAlGaSPO_4$-Verbindungen;
(v) den Formulierungen auf Basis von $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{0,35}La_{0,55}TiO_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (wobei M = Ge, Ti, und/oder Hf, und wobei 0 < x < 1), $Li_{1+x+y}Al_xTi_{2-x}Si_yP_{3-y}O_{12}$ (wobei 0 ≤

$x \leq 1$ und $\leq y \leq 1$), $Li_{1+x+z}M_xGe_{1-y}Ti_y)_{2-x}Si_zP_{3-z}O_{12}$ (wobei $0 \leq x \leq 0,8$; $0 \leq y \leq 1,0$; $0 \leq z \leq 0,6$), und insbesondere den Formulierungen 4,9Lil-34,1$Li_2O$-61$B_2O_3$, 0,30$Li_2S$-$_{0,2}$6$B_2S_3$-0,44Lil, 60$Li_2S$-40$SiS_2$, 0,02$Li_3PO_4$-0,98($Li_2S$-$SiS_2$), 2($Li_{1,4}Ti_2Si_{0,4}P_{2,6}O_{12}$)-$AlPO_4$, 0,7$Li_2S$-0,3$P_2S_5$.

10. Reine Festkörper-Schichtbatterie, **dadurch gekennzeichnet, dass** sie eine Vielzahl von Batterien nach einem der Ansprüche 1 bis 9 umfasst, die gestapelt sind.

11. Verfahren zur Herstellung von reinen Festkörper-Dünnschichtbatterien nach einem der Ansprüche 1 bis 10, umfassend die Schritte des:

(a) Beschaffens einer ersten kolloidalen Suspension *"SP+"*, die "*P*+" Teilchen enthält, "Kathodenmaterial" genannt;

(b) Beschaffens einer zweiten kolloidalen Suspension "*SP*-", die "*P*-" Teilchen enthält, "Anodenmaterial" genannt;

(c) Beschaffens einer dritten kolloidalen Suspension "*SPn*" mit "*Pn*" Teilchen, leitendes "Festkörperelektrolytmaterial" genannt;

(d) Beschaffens von leitenden Substraten in der Form eines Bandes oder einer Folie aus Aluminium;

(e) Eintauchens, in Gegenwart einer Gegenelektrode, eines ersten leitenden Substrats in ein Bad der P+ Kathodenmaterialteilchen enthaltenden Suspension *SP+*, gefolgt vom Anlegen einer elektrischen Spannung zwischen dem ersten leitenden Substrat und der Gegenelektrode, derart, dass eine elektrophoretische Abscheidung von P+ Kathodenmaterialteilchen auf dem ersten leitenden Substrat erhalten wird;

(f) Eintauchens, in Gegenwart einer Gegenelektrode, eines zweiten leitenden Substrats in ein Bad der P-Anodenmaterialteilchen enthaltenden Suspension *SP-*, gefolgt vom Anlegen einer elektrischen Spannung zwischen dem zweiten leitenden Substrat und der Gegenelektrode, derart, dass eine elektrophoretische Abscheidung von P-Anodenmaterialteilchen auf dem leitenden Substrat erhalten wird;

(g) Eintauchens, in Gegenwart einer Gegenelektrode, des im Schritt (e) beschichteten ersten Substrats und/oder des im Schritt (f) beschichteten zweiten Substrats in ein Bad der Suspension *SPn* mit *Pn* Festkörperelektrolytmaterialteilchen, gefolgt vom Anlegen einer elektrischen Spannung zwischen dem ersten und/oder zweiten beschichteten Substrat und der Gegenelektrode, derart, dass eine elektrophoretische Abscheidung von anorganischen Festkörperelektrolytmaterialteilchen auf dem oder den Substrat(en) erhalten wird;

(h) Stapelns der Kathoden- und Anodensubstrate, um eine Batterie zu erhalten.

12. Verfahren nach Anspruch 11, **dadurch gekennzeichnet, dass** die elektrophoretischen Abscheidungen der SP+ und/oder SP- und/oder SPn Teilchen durch Anaphorese erfolgen.

13. Verfahren nach Anspruch 11 oder 12, **dadurch gekennzeichnet, dass** das zeta-Potential der kolloidalen Suspensionen im Bereich zwischen 25 und 40 mV beträgt.

14. Verfahren nach einem der Ansprüche 11 bis 13, **dadurch gekennzeichnet, dass** die mittlere Größe $D_{50}$ der Anoden-, Kathoden- und/oder Festkörperelektrolytmaterial-Teilchen in den kolloidalen Suspensionen weniger als 1 $\mu$m, vorzugsweise weniger als 100 nm, und noch stärker bevorzugt weniger als oder gleich 30 nm beträgt.

## Claims

1. Fully solid layer battery, comprising an anode current collector, an anode electrode film, an electrolyte film, a cathode electrode film, a cathode current collector, **characterised in that** the anode current collector and the cathode current collector are made from aluminium foil, said aluminium foil being possibly thinned by electropolishing, and **in that** the electrode films and the electrolyte film were deposited by means of electrophoresis.

2. Battery according to claim 1, **characterised in that** said aluminium foil is covered with a metal deposit on the face in contact with the electrodes, and possibly also on the other face, said metal deposit being selected from the group comprising nickel, a nickel alloy, silver, tin, gold, zinc, with this deposit being applied before the deposit of the electrode films.

3. Battery according to claim 1 or 2, **characterised in that** said aluminium foil has a thickness less than 5 $\mu$m, preferably less than 2 $\mu$m, and **in that** the thickness of the electrodes is between 0.5 $\mu$m and 20 $\mu$m.

4. Battery according to any of claims 1 to 3, **characterised in that** the average size of the particles in the electrodes and electrolyte films is between 1 nm and 100 nm, preferably between 5 nm and 30 nm.

5. Battery according to any of claims 1 to 4, **characterised in that** the electrode films are each deposited using a suspension of nanoparticles comprising at least one electrode active material for lithium insertion battery, and at least one material which is an electrical conductor and/or an ionic conductor.

6. Battery according to any of claims 1 to 5, **characterised in that** at least one of said electrode films comprises at least one electrode active material for lithium insertion battery and at least one other material which is an electrical and/or ionic conductor.

7. Battery according to any of claims 1 to 6, **characterised in that** the material or materials forming the anode electrode film is (are) selected from the group formed by:

    i) oxynitrides of tin (of typical formula $SnO_xN_y$) ;
    (ii) mixed silicon and tin oxynitrides (of typical formula $Si_aSn_bOyN_z$ with a>0, b>0, a+b≤2, 0<y≤4, 0<z≤3) (also called SiTON), and in particular $SiSn_{0.87}O_{1.2}N_{1.72}$; as well as oxynitrides in the form $Si_aSn_bC_cO_yN_z$ with a>0, b>0, a+b≤2, 0<c-10, 0<y<24, 0<z<17; $Si_aSn_bC_cO_yN_zX_n$ and $Si_aSn_bO_yN_zX_n$ with Xn at least one of the elements from F, Cl, Br, I, S, Se, Te, P, As, Sb, Bi, Ge, Pb.
    (iii) nitrides of type $Si_xN_y$ (in particular with x=3 and y=4), $Sn_xN_y$ (in particular with x=3 and y=4), $2n_xN_y$ (in particular with x=3 and y=4), $Li_{3-x}M_xN$ (with M = Co, Ni, Cu);
    (iv) oxides $SnO_2$, $Li_4Ti_5O_{12}$, $SnB_{0.6}P_{0.4}O_{2.9}$.

8. Battery according to any of claims 1 to 7, **characterised in that** the material or materials forming the cathode electrode film is (are) selected from the group formed by:

    (a) oxides $LiMn_2O_4$, $LiCoO_2$, $LiNiO_2$, $LiMn_{1.5}Ni_{0.5}O_4$, $LiMn_{1.5}Ni_{0.5-x}X_xO_4$ (where x is selected from Al, Fe, Cr, Co, Rh, Nd, other rare earths, and where 0 < X < 0.1), $LiFeO_2$, $LiMn_{1/3}Ni_{1/3}Co_{1/3}O_4$;
    (b) phosphates $LiFePO_4$, $LiMnPO_4$, $LiCoPO_4$, $LiNiPO_4$, $Li_3V_2(PO_4)_3$;
    (c) all lithiated forms of the following chalcogenides: $V_2O_5$, $V_3O_8$, $TiS_2$, $TiO_yS_z$, $WO_yS_z$, $CuS$, $CUS_2$.

9. Battery according to any of claims 1 to 8, **characterised in that** the material or materials forming the electrolyte film is (are) selected from the group formed by:

    (i) t=lithiated compounds with a lithium and phosphorus oxynitride base (called LiPON) in the form $Li_xPO_yN_z$ with x ~2.8 and 2y+3z ~7.8 and $0.16 ≤ z ≤ 0.4$, and in particular $Li_{2.9}PO_{3.3}N_{0.46}$, but also all of the variants in the form $Li_wPO_xN_yS_z$ with 2x+3y+2z = 5=w and $3.2 ≤ x ≤ 3.8$, $0.13 ≤ y ≤ 0.4$, $0 ≤ z ≤ 0.2$, $2.9 ≤ w ≤ 3.3$ or in the form $Li_tP_xAl_yO_uN_vS_w$ with 5x+3y=5, 2u+3v+2w=5+t, 2.9≤t≤3.3, 0.94≤x≤0.84, 0.094≤y≤0.25, 3.2≤u≤3.8, 0.13≤v≤0.46, 0≤w≤0.2.
    (ii) lithiated compounds with a lithium, phosphorus and silicon oxynitride base (called LiSiPON), and in particular $Li_{1.9}Si_{0.28}P_{1.0}O_{1.1}N_{1.0}$;
    (iii) lithium oxynitrides of the types LiBON, LiBSO, LiSiPON, LiSON, thio-LiSiCON, LiPONB (where B, P and S are respectively boron, phosphorus and sulphur);
    (iv) compounds $La_{0.5}Li_{0.34}Ti_{2.94}$, $Li_{3.4}V_{0.4}Ge_{0.6}O_4$, $Li_2O-Nb_2O_5$, $LiAlGaSPO_4$;
    (v) formulations with a base of $Li_4SiO_4$, $Li_3PO_4$, $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3.6}Ge_{0.6}V_{0.4}O_4$, $LiTi_2(PO_4)_3$, $Li_{0.35}La_{0.55}TiO_3$, $Li_{3.25}Ge_{0.25}P_{0.25}S_4$, $Li_{1.3}Al_{0.3}Ti_{1.7}(PO_4)_3$, $Li_{1+x}Al_xM_{2-x}(PO_4)_3$ (where M = Ge, Ti, and/or Hf, and where 0 < X < 1), $Li_{t+x+y}Al_xTi_{2-x}Si_yP_{3-y}O_{12}$ (where 0≤x≤1 and 0≤y≤1), $Li_{t+x+z}M_X(Ge_{1-y}Ti_y)_{2-x}Si_zP_{3-z}O_{12}$ (where $0 ≤ x ≤0.8$; $0 ≤ y ≤ 1.0$; $0 ≤ Z ≤ 0.6$), and in particular formulations 4.9Li1-34.1$Li_2$O-61$B_2O_3$, 0.30$Li_2$S-0.26$B_2S_3$-0.44Lil, 60$Li_2$S-40Si$S_2$, 0.02$Li_3PO_4$-0.98($Li_2$S-Si$S_2$), 2($Li_{1.4}Ti_2Si_{0.4}P_{2.6}O_{12}$)-AlPO$_4$, 0.7$Li_2$S-0.3$P_2S_5$.

10. Fully solid film battery, **characterised in that** it comprises a plurality of batteries according to any of claims 1 to 9, stacked.

11. Method for manufacturing fully solid thin-film batteries according to any of claims 1 to 10, comprising the steps of:

    (a) Supplying of a first colloidal suspension "SP+" containing particles "P+" referred to as "cathode materials";
    (b) Supplying of a second colloidal suspension "SP-" containing particles "P-" referred to as "anode materials";

(c) Supplying of a third colloidal suspension "SPn" of particles "Pn" referred to as conductive "solid electrolyte materials";

(d) Supplying of conductive substrates in the form of a strip or aluminium foil;

(e) Immersion of a first conductive substrate in a bath of said suspension SP+ containing particles P+ of cathode materials in the presence of a counter electrode, followed by the application of an electrical voltage between said first conductive substrate and said counter electrode in such a way as to obtain an electrophoretic deposit of particles P+ of cathode materials on said first conductive substrate;

(f) Immersion of a second conductive substrate in a bath of said suspension SP- containing particles P- of anode materials in the presence of a counter electrode, followed by the application of an electrical voltage between said second conductive substrate and said counter electrode in such a way as to obtain an electrophoretic deposit of particles P- of anode materials on said conductive substrate;

(g) Immersion of the first substrate coated in the step (e) and/or of the second substrate coated in the step (f) in a bath of said suspension SPn of particles Pn of solid electrolyte materials in the presence of a counter electrode, followed by the application of an electrical voltage between said first and/or second coated substrate and the counter electrode in such a way as to obtain an electrophoretic deposit of particles of inorganic solid electrolyte materials on said substrate or substrates;

(h) Stack of cathode and anode substrates in order to obtain a battery.

12. Method according to claim 11, **characterised in that** the electrophoretic deposits of the particles SP+ and/or SP- and/or SPn are carried out by anaphoresis.

13. Method according to claim 11 or 12, **characterised in that** the zeta potential of said colloidal suspensions is between 25 and 40 mV.

14. Method according to any of claims 11 to 13, **characterised in that** the average size $D_{50}$ of the particles of anode, cathode and/or solid electrolyte materials in said colloidal suspensions is less than 1 $\mu$m, preferably less than 100 nm and more preferably less than or equal to 30 nm.

Figure 1

Figure 2

Nombre [%]

Diamètre [nm]

Figure 3

**Fabrication de la cathode**  **Fabrication de l'anode**

| | |
|---|---|
| **1.A** Dépôt des particules « P+ » par électrophorèse | Dépôt des particules « P- » par électrophorèse **1.B** |
| **2.A** Séchage des dépôts | Séchage des dépôts **2.B** |
| **3.A** Densification des dépôts | Densification des dépôts **3.B** |
| **4.A** Dépôt des particules « Pn » par électrophorèse | Dépôt des particules « Pn » par électrophorèse **4.B** |
| **5.A** Séchage des dépôts | Séchage des dépôts **5.B** |
| **6.A** Découpe sur 1 coté des électrodes revêtues | Découpe sur 1 coté des électrodes revêtues **6.B** |

**7** Empilement

**8** Densification de la jonction électrolytique

Figure 4

Figure 5(a)

Figure 5(b)

Figure 5(c)

Figure 5(d)

Figure 6

## RÉFÉRENCES CITÉES DANS LA DESCRIPTION

**Documents brevets cités dans la description**

- JP 2002042790 B

**Littérature non-brevet citée dans la description**

- Advances in Lithium-Ion Batteries. Kluever Academic / Plenum Publishers, 2002
- **XIAO.** *Trans. Nonferrous Me. Soc. China,* 2006, vol. 16, 281-285